# EUROPEAN PATENT SPECIFICATION

(11) **EP 3 747 562 B1**
(45) Date of publication and mention of the grant of the patent: **26.04.2023**
(21) Application number: 19178155.8
(22) Date of filing: 04.06.2019
(51) Int. Cl.: B08B 9/20, B08B 9/44, B65G 47/252

(54) **A FEEDING SYSTEM AND A RELATIVE METHOD FOR FEEDING EMPTY CONTAINERS TO A CONVEYING DEVICE OF A WASHING UNIT**
ZUFÜHRSYSTEM UND ZUGEHÖRIGES VERFAHREN ZUM ZUFÜHREN VON LEEREN BEHÄLTERN ZU EINER FÖRDERVORRICHTUNG EINER WASCHEINHEIT
SYSTÈME D'ALIMENTATION ET PROCÉDÉ ASSOCIÉ POUR ALIMENTER UN DISPOSITIF DE TRANSPORT D'UNE UNITÉ DE LAVAGE DE CONTENANTS VIDES

(43) Date of publication of application: 09.12.2020
(73) Proprietor: Sidel S.p.A., 43126 Parma (IT)
(72) Inventor: BERZAGHI, Claudio, 37139 Verona (IT); BOTTOS, Luca, 37139 Verona (IT)
(74) Representative: Sidel Group

(56) References cited:
- EP-A1- 2 727 660
- EP-A1- 3 401 027
- JP-A- 2000 072 232

## Description

The invention relates to a feeding system for feeding empty containers to a conveying device of a washing unit.

The invention also relates to a method for feeding empty containers to a conveying device of a washing unit.

Washing units are known with the purpose of cleaning empty containers upstream of a filling and a labelling station, in which the containers are respectively filled with a pourable product and labelled with respective labels.

An example of washing unit is known, e.g. from EP2727660 in the name of the same of Applicant.

Known from JP2000072232 are a feeding system in accordance with the preamble of claim 1 for feeding a plurality of containers to a washing unit, and a method in accordance with the preamble of claim 10 for feeding a plurality of containers to a washing unit.

The known washing unit comprises:
- a feeding system;
- a washing tunnel;
- a looped chain conveyor for advancing the containers along a closed path and which extends inside the washing tunnel from an inlet station to an outlet station; and
- a plurality of successive treatment zones through which the chain conveyor advances the containers inside the washing tunnel.

In detail, a known feeding system comprises a plurality of side-by-side endless conveyors and a sequencing device interposed between the endless conveyors and the inlet station of the washing tunnel.

The endless conveyors comprise a respective plurality of channels along which a plurality of rows of containers is advanced towards the inlet station of the chain conveyor.

The sequencing device withdraws, one after the other, the rows of containers from the endless conveyors and conveys all the containers of the withdrawn row to the chain conveyor at the inlet station.

The chain conveyor fed with the rows of containers to be washed outputs washed articles to the outlet station.

In detail, the chain conveyor comprises a plurality of beams moving along the aforementioned closed loop path and defining each a corresponding plurality of aligned pockets, which receive, at the inlet station, the containers of a respective withdrawn row by the sequencing device.

At the inlet station, the beams are arranged such that the axes of the respective pockets are horizontally oriented.

The sequencing device comprises a plurality of parallel guides respectively adapted to:
- receive the containers of a row from the endless conveyors; and
- guide the received containers toward the inlet station along respective parallel guiding profiles.

The parallel guiding profiles are equal to one another and lie on vertical planes evenly spaced along a horizontal direction and respectively aligned with the endless conveyors.

Each of the guiding profiles has a curvilinear end portion arranged on the side of the relative endless conveyor and a horizontal end portion arranged on the side of the inlet station.

According to the known feeding system, the sequencing device further comprises, for each guide, a relative moving mechanism, which is adapted to:
- withdraw one container from the corresponding endless conveyor;
- let the same container to engage the guide; and
- push the container itself through the guide along the corresponding guiding profile and towards the inlet station.

A oriented feeding direction of the container is defined, therefore, by the guiding profiles from the endless conveyors to the inlet station.

To withdraw the container and push the latter along the guiding profile, according to the oriented feeding direction, the corresponding moving mechanism includes a pickup wheel and a pushing wheel.

In detail, the pickup wheel rotates about a first horizontal axis, which is fixed and orthogonal to the guiding profile and arranged in the area of the curvilinear end portion below the horizontal end portion.

On the other hand, the pushing wheel is rotatable about a second axis, which is parallel to the first axis and arranged at a fixed distance above the horizontal end portion.

The pushing wheel comprises a finger and an appendix, which have equal radial extensions from the second axis and a fixed angular spacing between each other about the same second axis. In particular, on the plane of the guiding profile, the finger and the appendix radially end with corresponding edges, which lie on a same imaginary circumference.

The pushing wheel of each moving mechanism rotates in a coordinated manner with the pickup wheel according to a constant transmission ratio, such that, as soon as the respective moved container reaches the horizontal end portion, the finger meets the container itself.

Then, the finger pushes the container along the horizontal end portion, according to the oriented feeding direction, i.e. toward the inlet station.

At the inlet station, the beams of the conveyor member move in accordance with the rotation of the pushing wheel, such that the finger partially introduces the container inside a corresponding pocket of one of such beams.

Then, continuing to rotate, the finger loses contact with the container that, in the meantime, is also conveyed upwards by the receiving beam, although slightly protruding horizontally from the same beam.

After the interruption of the contact and before the pushing wheel completes a full round about the second axis, the appendix meets the protruding container and further pushes the latter into the corresponding pocket.

When also the appendix loses contact with the container, the latter results completely inserted within the corresponding pocket.

Even well performing, the previously described feeding system leaves room for improvement.

Actually, the complete insertion of a containers in a pocket requires the pushing wheel to perform a full round about its axis.

Furthermore, a double impact between the pushing wheel itself and the container to be inserted is also required.

In view of this double impact, the angular rate of the pushing wheel should be maintained below a restrictive threshold, in such a manner to avoid damages on containers or even the break thereof.

Both the slowness of the pushing wheel and the need of a full round thereof, in order to perform a complete insertion, lead to a relatively reduced feeding rate and thus to a limited efficiency of the feeding system.

Therefore, a need is felt to improve known feeding systems by increasing their feeding rate, without reliability losses.

It is an object of the invention to provide a feeding system for feeding empty containers to a conveying device of a washing unit, which allows meeting the above need in a simple and economic manner.

Such an object is achieved by the invention since relating to a feeding system configured for feeding a plurality of empty containers to a conveying device of a washing unit, as claimed in claim 1.

The invention also relates to a method for feeding a plurality of empty containers to a conveying device of a washing unit, as claimed in claim 10.

One preferred embodiment is hereinafter disclosed for a better understanding of the invention, by way of non-limitative example and with reference to the accompanying drawings, in which:
- Figure 1 is a lateral view of a washing unit for treating empty containers comprising a feeding system according to the invention, with parts removed for clarity;
- Figure 2 is a lateral enlarged view of the feeding system and of the washing unit of Figure 1, with parts removed for clarity;
- Figure 3 is a perspective enlarged view of the feeding system and of the washing unit of Figure 1, with parts removed for clarity; and
- Figures 4 to 8 show subsequent respective operative steps of the feeding system of Figure 1.

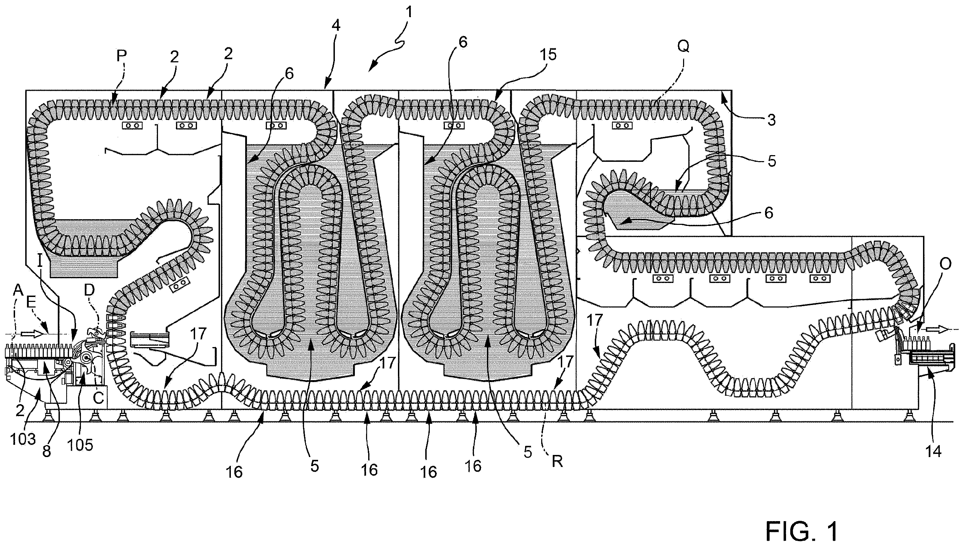

With reference to figures 1, numeral 1 indicates a washing unit for washing containers 2, in particular empty bottles intended to be filled with a pourable product.

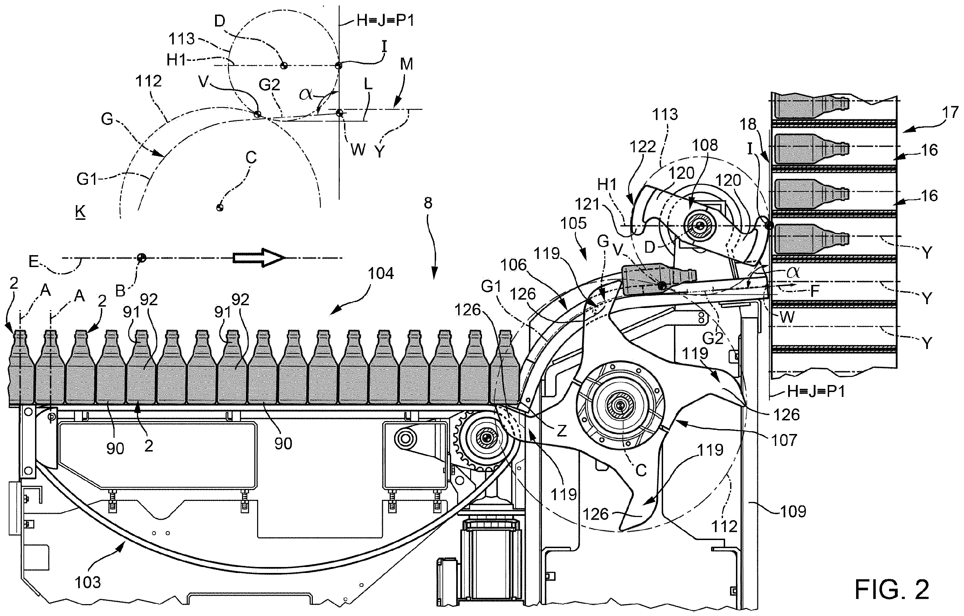

In detail, each container 2 extends along an axis A and comprises (Figure 2):
- a bottom portion 90;
- a neck portion 91; and
- a body 92.

With reference to Figure 1, washing unit 1 substantially comprises:
- a washing tunnel 3, which is fed with empty containers 2 to be washed and in which containers 2 are washed;
- a chain conveyor 4 for advancing containers 2 inside washing tunnel 3 along a washing path, in particular a closed loop path P; and
- a plurality of treatment zones 5, which are arranged inside washing tunnel 3 and comprise, in the embodiment shown, respective tanks 6 filled with respective cleaning agents and through which chain conveyor 4 advances containers 2.

Washing unit 1 also comprises:
- a feeding system 8, which feeds a sequence of rows 101 of containers 2 to chain conveyor 4 at an inlet station I of washing tunnel 3; and
- an outfeed conveyor 14, which receives a sequence of rows of cleaned containers 2 from chain conveyor 4 at an outlet station O of washing tunnel 3.

Path P comprises inlet station I, at which containers 2 are completely detached from feeding system 8 and fed to chain conveyor 4.

Path P further comprises outlet station O, at which containers 2 are completely discharged from chain conveyor 4 and received by outfeed conveyor 14.

As shown in Figure 2, path P lies on a vertical plane and has a rectilinear vertical portion P1 comprising inlet station I.

Path P further has a work branch Q and a return branch R, which respectively extends from inlet station I to outlet station O and from outlet station O to inlet station I.

Chain conveyor 4 advances fed containers 2 along work branch Q and returns without containers 2 along return branch R.

As shown in Figure 1, chain conveyor 4 comprises:
- a pair of chains 15 (only one of which is schematically shown in Figure 1) elongated parallel to path P and parallel to one another; and
- a plurality of subsequent conveying beams 16, which extend between chains 15 and orthogonally to chains 15 and path P.

Chain conveyor 4 further comprises a stationary guide (not shown) for supporting chains 15. Guide is shaped in the same way as path P.

Each beam 16 comprises a plurality of seats 17 having respective axes Y parallel to one another, so as to define a plane M; seats 17 are suitable for housing relative containers 2 with axes A parallel to axes Y.

Each seat 17 has a corresponding open end 18 arranged about the relative axis Y and adapted to admit one container 2.

At inlet station I, each beam 16 is adapted to receive a corresponding row 101 from feeding system 8. In particular, all the containers 2 of each row 101 are respectively fed to seats 17 of a corresponding beam 16 traveling at inlet station I.

The respective seats 17 of each beam 16 are aligned orthogonally to path P. Accordingly, also containers 2, when conveyed along work branch Q, are aligned orthogonally to path P.

When each beam 16 travels along portion P1, the respective seats 17 have the relative axes Y horizontally oriented, as well as the corresponding plane M is horizontal.

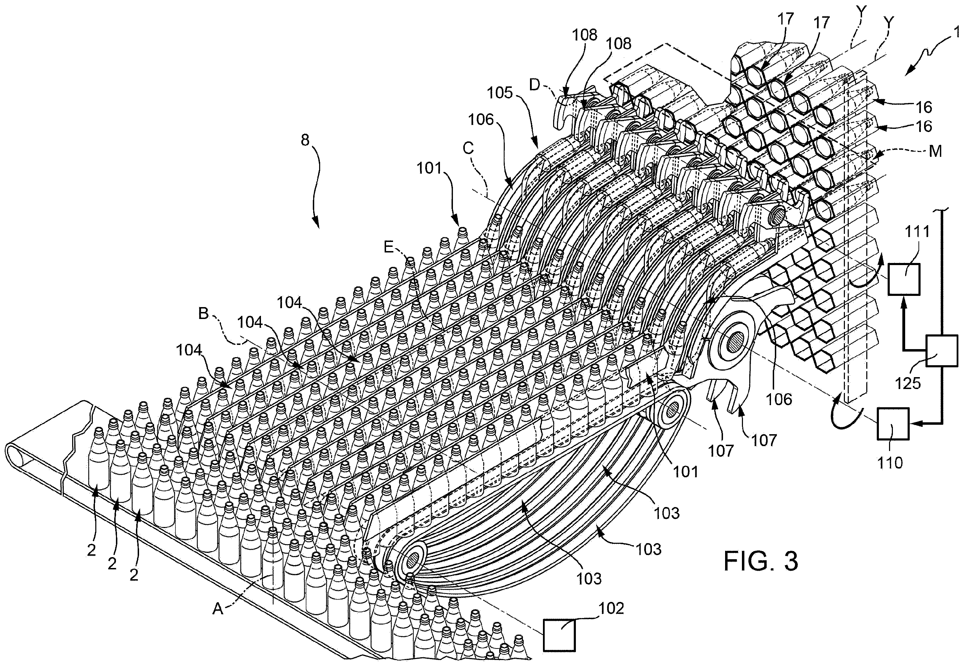

Feeding system 8 comprises, with special reference to Figures 2 and 3:
- a plurality of endless conveyors 103 (only one of which is shown in Figure 2), which define respective channels 104 extending along respective conveying directions E, in particular horizontal, arranged alongside one another according to a transversal direction B, specifically orthogonal to conveying directions E;
- a motor 102, which drives conveyors 103; and
- a sequencing device 105, which receives the rows 101, one after the other, from conveyors 103 and separately feeds the containers 2 of each received row 101 to inlet station I.

In detail, each row 101 is arranged orthogonally to conveying directions E, i.e. parallel to direction B.

Sequencing device 105 comprises a frame 109 and, for each conveyor 103, a moving mechanism.

The moving mechanism comprises:
- a guiding surface 106 extending along a guiding profile G, which is fixed with respect to frame 109, is adapted to guide containers 2 from the corresponding conveyor 103 towards inlet station I, i.e. according to an oriented feeding direction F, and comprises a starting stretch G1 and an ending stretch G2 according to oriented feeding direction F;
- a pickup wheel 107 hinged to frame 109 and rotatable to picking up containers 2, one after the other, from the corresponding conveyor 103, and to cause the picked up containers 2 engaging guiding surface 106 at starting stretch G1 and moving thereon along oriented feeding direction F to reach ending stretch G2;

- a pushing wheel 108 hinged to frame 109 downstream of pickup wheel 107, according to oriented feeding direction F, and rotatable in a coordinated manner with pickup wheel 107 to push containers 2 moving onto ending stretch G2, according to oriented feeding direction F; and
- a pair of actuators or motors 110, 111, which are respectively coupled to pickup wheel 107 and pushing wheel 108 to drive them in rotation with respect to frame 109.

In other words, guiding surface 106, in cooperation with pickup wheel 107 and pushing wheel 108 driven by actuators 110, 111, feeds inlet station I with containers 2 conveyed through a corresponding channel 104 by the relative endless conveyor 103.

Specifically, containers 2 are moved onto guiding surface 106 in a sliding manner by means of pickup wheel 107 and pushing wheel 108.

Here and in the following of the description, oriented feeding direction F is regarded as oriented according to the advancing direction of containers 2 onto guiding profile G towards inlet station I.

Guiding profile G lies on an infeed plane K, which is vertical in the embodiment shown.

In detail, starting and ending stretch G1, G2 respectively define for guiding profile G two opposite endpoints Z, W, which are correspondingly arranged on the side of the corresponding conveyor 103 and inlet station I.

In particular, inlet station I is arranged downstream of extreme point W, according to oriented feeding direction F.

In the embodiment shown, starting stretch G1 and ending stretch G2 completely define the guiding profile G, i.e. they have a common endpoint V, opposite to endpoints Z, W, from which pushing wheel 108 starts to push containers 2.

Pickup wheel 107 and pushing wheel 108 rotate about respective axes C, D orthogonal to plane K and, therefore parallel to each other.

As shown in Figure 2, axes C, D are arranged at opposite sides of guiding profile G, with respect to oriented feeding direction F, in particular below and above guiding surface 106.

Furthermore, axis D is placed downstream of axis C, according to oriented feeding direction F.

Pickup wheel 107 comprises a plurality of arms 119 (four arms 119, in the embodiment shown) adapted to contact bottom portions 90 of containers 2 at endpoint Z and to push contacted containers 2 onto starting stretch G1 along oriented feeding direction F.

Specifically, as shown in Figure 2, each of arms 119 extends from axis C according to a corresponding hook-like profile up to radially end, with respect to axis C, with a relative end portion 126.

Each relative end portion 126 defines, in particular, a planar surface to support a container 2 in correspondence of endpoint Z.

Moreover, end portions 126 have respective tips, which trace on plane K an imaginary circumference 112 during the rotation of pickup wheel 107,.

In the embodiment shown, imaginary circumference 112 intersects starting stretch G1; however, more generally, the same imaginary circumference 112 might not intersects starting stretch G1.

Similarly, pushing wheel 108 comprises a plurality of fingers 120 (two fingers 120, in the embodiment shown), which radially extend from axis D until ending with respective end portions 121 adapted to push containers 2 traveling onto ending stretch G2.

Fingers 120 have a fixed angular spacing between each other with respect to axis D and, preferably, extend from axis D in a diametrically opposed and symmetric manner, with respect to axis D.

More precisely, end portions 121 contacts bottom portions 90 of containers 2 in correspondence of endpoint V and push contacted containers 2 until the latter are completely fed to chain conveyor 4.

End portions 121 trace on plane K, during the rotation of pushing wheel 108, an imaginary circumference 113.

In particular, each end portion 121 comprises a corresponding pushing surface 122 extending along a relative arc of circumference 113.

In the embodiment shown, imaginary circumference 113 intersects ending stretch G2; however, more generally, the same imaginary circumference 113 might not intersect ending stretch G2.

It is possible to define a tangent line H to circumference at inlet station I, where pushing wheel 108 loses contact with pushed containers 2.

Tangent line H is also tangent at inlet station I to an imaginary curve J defined by the trajectory traced by the boundaries of open ends 18, while corresponding beams 16 travel along path P.

With detail, tangent line H is parallel to vertical portion P1 of path P and orthogonal to one conveying direction E.

In the embodiment shown, imaginary curve J, vertical portion P1, and tangent line H coincide to each other.

Moreover, in the embodiment shown, oriented feeding direction F extends towards inlet station I tangentially to ending stretch G2, in particular at least in correspondence of endpoint W.

Furthermore, in the embodiment shown, oriented feeding direction F is point-by point tangent to guiding profile G; in other words oriented feeding direction F has a first portion coincident with guiding profile G and a second rectilinear portion extending from endpoint W and ending at the intersection with tangent line H.

Oriented feeding direction F forms with tangent line H an angle α, which defines a plane portion comprising axis D. In other words, axis D is orthogonal to the plane portion or intersects the plane portion in a point.

In accordance with the invention, angle α is greater than 90°.

A further tangent line L to circumference 113 is defined by being orthogonal to tangent line H and by being the nearest to ending stretch G2; in the embodiment shown, tangent line L is horizontal.

According to oriented feeding direction F, ending stretch G2 diverges from tangent line L towards a line H1 parallel thereto and intersecting axis D.

In other words, ending stretch G2 progressively approaches plane M, according to oriented feeding direction F, when the corresponding seats 17 reach inlet station I.

In practice, ending stretch G2 is defined, in the embodiment shown, by a vertically ascending ramp, according to oriented feeding direction F.

In particular, ending stretch G2 is rectilinear and has a length indicated by symbol l.

Feeding system 8 also comprises a control unit 125 connected to actuators 110, 111 and, additionally, to chain conveyor 4.

Control unit 125 is configured for independently operating actuators 110, 111 to control the respective rotations of pickup wheel 107 and pushing wheel 108.

In particular, control unit 125 controls the respective rotations of pickup wheel 107 and pushing wheel 108 in a coordinated manner, such that the sliding of containers 2 onto sliding surface 106 occurs essentially smoothly or without abrupt interruptions.

In other words, containers 2 smoothly passes from being pushed by pickup wheel 107 to being pushed by pushing wheel 108.

Similarly, control unit 125 is configured to control the rotation of pushing wheel 108, in particular the angular rate thereof, as a function of the linear velocity of beams 16 through inlet station I.

More precisely, control unit 125 controls the angular rate of pushing wheel 108 such that neck portion 91 of the pushed container 2 intercepts the corresponding seat 17 essentially when the body 92 of the same container 2 is in correspondence of point W.

Then, control unit 125 controls the angular rate of pushing wheel 108, as a function of the linear velocity of the relative beam 16, such that both pushing wheel 108 and the same beam 16 reach inlet station I at the same time.

Practically, pushing wheel 108 has a linear velocity component, which is parallel to tangent line H and equal to the linear velocity of beam 16.

The operation of washing unit 1 is described in detail in the following.

In the following, the operation of feeding system 8 is described with reference to only one guiding surface 106, one respective pickup wheel 107, and one respective pushing wheel 108 to feed containers 2 conveyed along only one respective channel 104.

Feeding system 8 advances a plurality of containers 2 to be washed through channel 104 defined by conveyor 103 and parallel to the respective conveying direction E.

Containers 2 are properly arranged with respective axes A orthogonal to conveying direction E, i.e. vertical, and with respective bottom portions 90 lying on conveyor 103.

Then, sequencing device 105 receives containers 2 from channel 104 and feeds them to inlet station I, where containers 2 are completely detached from feeding system 8 and at least partially inserted into respective seats 17.

In particular, conveyor 103 brings containers 2, one after the other, to rest on guide surface 106 at starting stretch G1. The resting container 2 is supported by guide surface 106 with axis A slightly inclined with respect to a vertical direction and pointing towards inlet station I.

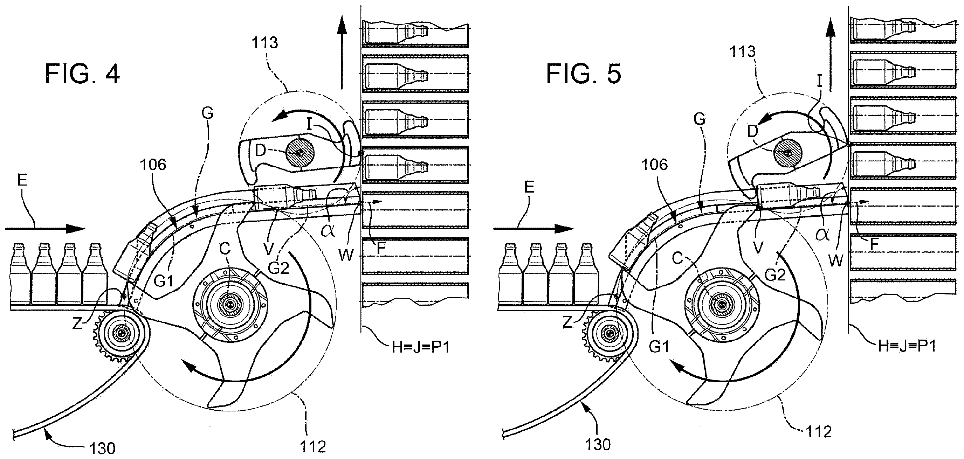

Here, pickup wheel 107 rotates to withdraw the resting container 2 with one arm 119, such that bottom portion 90 of the same container 2 receives support and a push action from end portion 126 to slide onto guiding surface 106 along starting stretch G1 (Figure 4).

The container 2 pushed by pickup wheel 107 slides along starting stretch G1 until the corresponding bottom portion 90 reaches endpoint V, where pushing wheel 108 contacts the bottom portion 90 itself (Figure 5).

Control unit 125 operates actuators 110, 111 such that the angular rates of pickup wheel 107 and pushing wheel 108 are coordinated with each other, in such a manner that both arm 119 and one of the two fingers 120 are in contact with the corresponding bottom portion 90, in correspondence of point V of guiding profile G.

Then, container 2 starts to slide along ending stretch G2 under the push action of both pickup wheel 107 and pushing wheel 108, until the same container 2 is not anymore intercepted by circumference 112.

The above arm 119 detaches from the above container 2, while another arm 119 withdraws another container 2 in an analogous manner to that already described above.

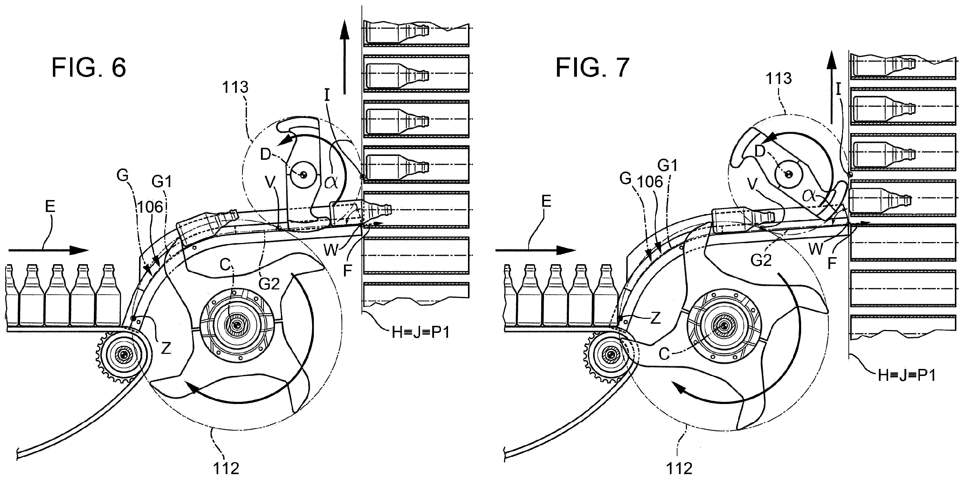

After having reached endpoint V, container 2 continues to slide along ending stretch G2 under the push action of pushing wheel 108. The angular rate of pushing wheel 108 is controlled as a function of the velocity of beams 16, such that the respective neck portion 91 intercepts the respective seat 17 of a corresponding beam 16 (Figure 6).

Oriented feeding direction F is tangent to ending stretch G2 at endpoint W and is inclined with respect to tangent line H of angle α, which is greater than 90°.

In other words, oriented feeding direction F progressively extends upwards.

When intercepting the respective seat 17, neck portion 91 is partially contained into the same seat 17, while body 92 is placed at point W and axis A is oriented as oriented feeding direction F, i.e. is inclined with respect to a horizontal direction.

Then, pushing wheel 108 continues to push container 2 into the respective seat 17, while the same container 2 is conveyed upwards by the corresponding beam 16 (Figure 7). The angular rate of pushing wheel 108 and the linear velocity of the latter beam 16 are such that they respectively reach inlet station I at the same time.

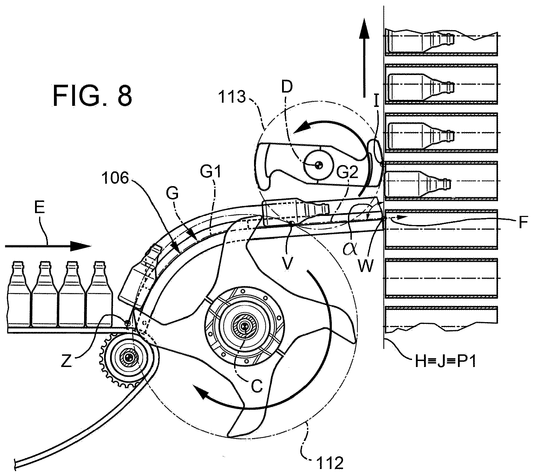

Here, at inlet station I, pushing wheel 108 loses contact with container 2, which results completely inserted into the respective seat 17 (Figure 8).

The same operations occur for each channel 104, such that beam 16 withdraws a row 101 of containers 2 at inlet station I from sequencing device 105.

Beam 16 of chain conveyor 4 advances containers 2 inside washing tunnel 3 along work branch Q, discharges cleaned containers 2 at outlet station O onto outfeed conveyor 14 and returns along return branch R without containers 2.

From an analysis of the features of feeding system 8 and of method according to the present invention, the advantages it allows to obtain are apparent.

In particular, since angle α is greater than 90°, the same ending stretch G2 gets closer to inlet station I, according to oriented feeding direction F, with respect to known solutions in which the corresponding angle is exactly equal to 90°.

Thanks to that, in respect to known solutions, the contact between pushing wheel 108 and containers 2 is prolonged in time, so that containers 2 perform a greater displacement in oriented feeding direction F before losing contact with pushing wheel 108.

In detail, with reference to the embodiment shown (where ending stretch G2 is rectilinear), each container 2 sliding along ending stretch G2 performs a displacement parallel to line H and equal to l·cos(α). With angle α equal to 90°, like in the known solution described in the introductory portion of this description, such a displacement is evidently null.

Hence, with respect to this known solution, containers 2 begin to intercept the respective seats 17 at a reduced distance from inlet station I.

Thanks to the latter displacement, the angle β swept by fingers 120 about axis D, while in contact with respective containers 2, results increased with respect to the corresponding angle swept according to known solution.

Indeed, cos(β) is directly increased by a quantity equal to l·cos(α).

Hence, also sin (β) is increased, as well as its product with the radial extension of finger 120; the latter product corresponds to the increased displacement of containers 2 orthogonally to line H.

This increased displacement allows a single finger 120 to cause the complete insertion of containers 2 into the respective seats 17. Accordingly, pushing wheel 108 does not need any appendix to give a further push action to containers 2.

Since pushing wheel 108 comprises two symmetric fingers 120, two following containers 2 can be inserted into respective seats 17 after a single complete round of pushing wheel 108.

Therefore, the feeding rate of feeding system 8 is doubled with respect to known solutions, considering the same angular rate of pushing wheel 108 and of the corresponding known pushing wheel.

Hence, the reliability of feeding system 8 remains extremely high.

In addition, the possibility of controlling actuators 110, 111, i.e. pickup wheel 107 and pushing wheel 108, in an independent manner, makes feeding system 8 adaptable to feed containers with different dimensions or formats with respect to those of containers 2.

Clearly, changes may be made to feeding system 8 and method as described and illustrated herein without, however, departing from the scope of protection as defined in the accompanying claims.

Specifically, pickup wheel 107 may be replaced by any other device adapted to put containers 2 onto guiding surface 106 and to push the same containers 2 along guiding profile G.

Pickup wheel 107 and pushing wheel 108 may respectively have a different number of arms 119 and a different number of fingers 120, with respect to what shown and described. In particular, pushing wheel 108 may be defined by only one finger 120.

The shape of guiding profile G may be different from that shown and described; for instance, starting stretch G1 may be rectilinear or ending stretch G2 may be curvilinear.

Circumferences 112, 113 may be slightly spaced from guiding profile G, instead of intersecting the latter.

Moreover, point W may belong to line H, instead of being placed upstream of the latter.

Eventually, oriented feeding direction F might not coincide with guiding profile G. For instance, ending stretch G2 may present small bumps or curvilinear portions, which however do not affect the linearity of the movement of containers 2 thereon. Else, downstream of endpoint W, according to oriented feeding direction F, guiding profile G may have an appendix that remains not engaged by containers 2.

## Claims

1. A feeding system (8) configured for feeding a plurality of empty containers (2) to a conveying device (4) of a washing unit (1) at an inlet station (I); said feeding system (8) comprising:
- at least one guiding profile (G) adapted to guide said containers (2) according to an oriented feeding direction (F), which is oriented according to the advancing direction, in use, of said containers (2); and
- moving means (107, 108, 110, 111) for moving said containers (2) onto said guiding profile (G) along said oriented feeding direction (F);
said guiding profile (G) comprising an end stretch (G2) having a free end (W) arranged on the side of said inlet station (I);
said containers (2) being completely detached, in use, from said feeding system (8) at said inlet station (I);
said moving means (107, 108, 110, 111) comprising, in turn, at least one first finger (120), which is rotatable about a first axis (D) fixed with respect to said guiding profile (G), extends radially from said first axis (D), and has an end portion (121) configured to push, in use, said containers (2) traveling onto said end stretch (G2);
said end portion (121) tracing, in use, about said first axis (D), an imaginary circumference (113) coplanar with said guiding profile (G); a line (H) being tangent, in use, to said circumference (113) at said inlet station (I);
said oriented feeding direction (F) forming with said line (H) an angle (α) defining a plane portion comprising said first axis (D);
**characterized in that** said angle (α) is greater than 90° and
wherein said end stretch (G2) progressively approaches, according to said oriented feeding direction (F), a plane (M) including said first axis (D) and orthogonal to said line (H).

2. The feeding system of claim 1, wherein said plane, in use, (M) is horizontal.

3. The feeding system of any one of the foregoing claims, wherein said end stretch (G2) is rectilinear.

4. The feeding system of any of the foregoing claims, wherein said free end (W) lies on said line (H) or is arranged upstream of said line (H), according to said oriented feeding direction (F).

5. The feeding system of any one of the foregoing claims, wherein said moving means (107, 108, 110, 111) comprise at least one second finger (120) extending radially from said first axis (D) and having a fixed angular spacing from said first finger (120) with respect to said first axis (D).

6. The feeding system of any one of the foregoing claims, wherein said moving means (107, 108, 110, 111) further comprise:
- a pickup wheel (107) rotatable about a second axis (C) fixed and parallel to said first axis (D) and configured to move, in use, said containers (2) onto a further stretch (G1) of said guiding profile (G); said further stretch (G1) being arranged upstream of said end stretch (G2), according to said oriented feeding direction (F);
- a first and a second actuator (110, 111) respectively coupled to said pickup wheel (107) and to said first finger (120) for driving independently the same pickup wheel (107) and the same first finger (120) about the respective said first and second axis (C, D); and
- a control unit (125) coupled to said first and second actuator (110, 111);
said control unit (125) being programmed for operating said first and second actuator (110, 111) to control the rotations of said pickup wheel (107) and of said first finger (120) in a coordinated manner, such that said containers (2) continuously pass from being moved by said pickup wheel (107) to being pushed by said end portion (121).

7. The feeding system of claim 6, wherein said end stretch (G2) and said further stretch (G1) are partly overlapping and, preferably, define completely said guiding profile (G).

8. A washing unit (1) for cleaning a plurality of empty containers (2), the washing unit comprising:
- a feeding system (8) according to any one of the foregoing claims;
- a conveying device (4) movable along a washing path (P) and comprising a plurality of seats (17) aligned along said path (P) and respectively fed, in use, with said containers (2) by said feeding system (8) at said inlet station (I);
said path (P) comprising said inlet station (I), at which said containers (2) are at least partially inserted within the respective said seats (17);
said seats (17) having respective open ends (18) adapted to receive said containers (2) from said feeding system (8); the trajectory of the boundaries of said open ends (18) defining, in use, an imaginary curve (J) tangent to said line (H) at said inlet station (I).

9. The washing unit of claim 8, wherein said seats (17) have respective further axes (Y), which lie on a plane (M) at said inlet station (I); said plane (M) being orthogonal to said line (H).

10. A method for feeding a plurality of empty containers (2) to a conveying device (4) of a washing unit (1) at an inlet station (I) by means of a feeding system (8); the feeding system (8) comprising:
- at least one guiding profile (G), which is adapted to guide said containers (2) according to a oriented feeding direction (F) and comprises an end stretch (G2) having a free end (W); and
- at least one first finger (120), which is rotatable about a first axis (D) fixed with respect to said guiding profile (G), extends radially from said first axis (D), and has an end portion (121) configured to push said containers (2) traveling onto said end stretch (G2);
the method comprising the step of:
i) moving said containers (2) onto said guiding profile (G) along said oriented feeding direction (F);
wherein the step i) comprises:
ii) pushing said containers (2) traveling onto said end stretch (G2) by means of said end portion (121);
the method further comprising the steps of:
iii) detaching completely said containers (2) from said feeding system (8) at said inlet station (I); and
iv) rotating said end portion (121) about said first axis (D) and along an imaginary circumference (113) coplanar with said guiding profile (G); a line (H) being tangent to said circumference (113) at said inlet station (I);
said oriented feeding direction (F) forming with said line (H) an angle (α) defining a plane portion comprising said first axis (D);
**characterized in that** said angle (α) is greater than 90° and said end stretch (G2) progressively approaches, according to said oriented feeding direction (F), a plane (M) including said first axis (D) and orthogonal to said line (H).

11. The method of claim 10, wherein the step i) further comprises:
v) moving said containers (2) onto a further stretch (G1) of said guiding profile (G) by means of a pickup wheel (107) making part of said feeding system (8) and rotatable about a second axis (C) fixed and parallel to said first axis (D); said further stretch (G1) being arranged upstream of said end stretch (G2), according to said oriented feeding direction (F);
wherein the method further comprises the step of:
vi) controlling the rotations of said pickup wheel (107) and of said first finger (120) in a coordinated manner, such that said containers (2) continuously pass from being moved by said pickup wheel (107) to being pushed by said end portion (121).

12. The method of claim 10 or 11, further comprising the step of:
vii) moving said conveying device (4) along a washing path (P) comprising said inlet station (I);
said conveying device (4) comprising a plurality of seats (17) aligned along said path (P);
the method further comprising the step of:
viii) inserting said containers (2), at least partially, within the respective said seats (17) at said inlet station (I);
said seats (17) having respective open ends (18) adapted to receive said containers (2) from said feeding system (8); the trajectory of the boundaries of said open ends (18) defining an imaginary curve (J) tangent to said line (H) at said inlet station (I).

13. The method of claim 12, wherein the step vii) comprises the step of:
ix) moving said conveying device (4) in a coordinated manner with the rotation of said first finger (120), such that said end portion (121) reaches said inlet station (I) when one of said seats (17) reaches the same inlet station (I).

## Patentansprüche

1. Zufuhrsystem (8), das zum Zuführen einer Mehrzahl von leeren Behältern (2) zu einer Fördervorrichtung (4) einer Wascheinheit (1) an einer Einlassstation (I) ausgelegt ist; wobei das Zufuhrsystem (8) Folgendes umfasst:
- mindestens ein Führungsprofil (G), das dazu eingerichtet ist, die Behälter (2) gemäß einer ausgerichteten Zufuhrrichtung (F) zu führen, die im Gebrauch gemäß der Vorschubrichtung der Behälter (2) ausgerichtet ist; und
- Bewegungsmittel (107, 108, 110, 111) zum Bewegen der Behälter (2) auf das Führungsprofil (G) entlang der ausgerichteten Zufuhrrichtung (F);
wobei das Führungsprofil (G) eine Endstrecke (G2) umfasst, die ein freies Ende (W) aufweist, das auf der Seite der Einlassstation (I) angeordnet ist;
wobei die Behälter (2) im Gebrauch an der Einlassstation (I) vollständig von dem Zufuhrsystem (8) gelöst sind;
wobei die Bewegungsmittel (107, 108, 110, 111) wiederum mindestens einen ersten Finger (120) umfassen, der um eine in Bezug auf das Führungsprofil (G) feststehende erste Achse (D) drehbar ist, sich radial von der ersten Achse (D) erstreckt und einen Endabschnitt (121) aufweist, der dazu ausgelegt ist, im Gebrauch die auf der Endstrecke (G2) verfahrenden Behälter (2) anzuschieben;
wobei der Endabschnitt (121) im Gebrauch um die erste Achse (D) einen mit dem Führungsprofil (G) komplanaren imaginären Umfang (113) verfolgt; wobei eine Linie (H) im Gebrauch zu dem Umfang (113) an der Einlassstation (I) tangential ist;
wobei die ausgerichtete Zufuhrrichtung (F) mit der Linie (H) einen Winkel (α) bildet, der einen ebenen Abschnitt definiert, der die erste Achse (D) umfasst;
**dadurch gekennzeichnet, dass** der Winkel (α) größer als 90° ist und
wobei sich die Endstrecke (G2) gemäß der ausgerichteten Zufuhrrichtung (F) zunehmend einer Ebene (M) annähert, die die erste Achse (D) umfasst und orthogonal zu der Linie (H) ist.

2. Zufuhrsystem nach Anspruch 1, wobei im Gebrauch die Ebene (M) horizontal ist.

3. Zufuhrsystem nach einem der vorhergehenden Ansprüche, wobei die Endstrecke (G2) geradlinig ist.

4. Zufuhrsystem nach einem der vorhergehenden Ansprüche, wobei gemäß der ausgerichteten Zufuhrrichtung (F) das freie Ende (W) auf der Linie (H) liegt oder stromaufwärts von der Linie (H) angeordnet ist.

5. Zufuhrsystem nach einem der vorhergehenden Ansprüche, wobei die Bewegungsmittel (107, 108, 110, 111) mindestens einen zweiten Finger (120) umfassen, der sich radial von der ersten Achse (D) erstreckt und einen festen Winkelabstand von dem ersten Finger (120) in Bezug auf die erste Achse (D) aufweist.

6. Zufuhrsystem nach einem der vorhergehenden Ansprüche, wobei die Bewegungsmittel (107, 108, 110, 111) ferner Folgendes umfassen:
- ein Aufnehmerrad (107), das um eine feststehende und zu der ersten Achse (D) parallele zweite Achse (C) drehbar ist und dazu ausgelegt ist, im Gebrauch die Behälter (2) auf eine weitere Strecke (G1) des Führungsprofils (G) zu bewegen; wobei die weitere Strecke (G1) gemäß der ausgerichteten Zufuhrrichtung (F) stromaufwärts der Endstrecke (G2) angeordnet ist;
- einen ersten und einen zweiten Aktuator (110, 111), die jeweils mit dem Aufnehmerrad (107) und mit dem ersten Finger (120) gekoppelt sind, um unabhängig das Aufnehmerrad (107) und den ersten Finger (120) um die erste bzw. zweite Achse (C, D) anzutreiben; und
- eine Steuereinheit (125), die mit dem ersten und zweiten Aktuator (110, 111) gekoppelt ist;
wobei die Steuereinheit (125) dazu programmiert ist, den ersten und zweiten Aktuator (110, 111) zu betreiben, um die Drehungen des Aufnehmerrads (107) und des ersten Fingers (120) in einer koordinierten Weise zu steuern, so dass die Behälter (2) kontinuierlich von dem Bewegen durch das Aufnehmerrad (107) zu dem Anschieben durch den Endabschnitt (121) übergehen.

7. Zufuhrsystem nach Anspruch 6, wobei die Endstrecke (G2) und die weitere Strecke (G1) sich teilweise überlappen und vorzugsweise das Führungsprofil (G) vollständig definieren.

8. Wascheinheit (1) zum Reinigen einer Mehrzahl von leeren Behältern (2), wobei die Wascheinheit Folgendes umfasst:
- ein Zufuhrsystem (8) nach einem der vorhergehenden Ansprüche;
- eine Fördervorrichtung (4), die entlang eines Waschpfads (P) bewegbar ist und eine Mehrzahl von Aufnahmen (17) umfasst, die entlang des Pfads (P) fluchten und denen im Gebrauch durch das Zufuhrsystem (8) an der Einlassstation (I) jeweils die Behälter (2) zugeführt werden;
wobei der Pfad (P) die Einlassstation (I) umfasst, an der die Behälter (2) zumindest teilweise in die jeweiligen Aufnahmen (17) eingesetzt werden;
wobei die Aufnahmen (17) jeweilige offene Enden (18) aufweisen, die dazu eingerichtet sind, die Behälter (2) von dem Zufuhrsystem (8) aufzunehmen; wobei die Trajektorie der Grenzlinien der offenen Enden (18) im Gebrauch eine imaginäre Kurve (J) definiert, die an der Einlassstation (I) tangential zu der Linie (H) ist.

9. Wascheinheit nach Anspruch 8, wobei die Aufnahmen (17) jeweilige weitere Achsen (Y) aufweisen, die an der Einlassstation (I) auf einer Ebene (M) liegen; wobei die Ebene (M) orthogonal zu der Linie (H) ist.

10. Verfahren zum Zuführen einer Mehrzahl von leeren Behältern (2) zu einer Fördervorrichtung (4) einer Wascheinheit (1) an einer Einlassstation (I) mittels eines Zufuhrsystems (8); wobei das Zufuhrsystem (8) Folgendes umfasst:
- mindestens ein Führungsprofil (G), das dazu eingerichtet ist, die Behälter (2) gemäß einer ausgerichteten Zufuhrrichtung (F) zu führen, und eine Endstrecke (G2) umfasst, die ein freies Ende (W) aufweist; und
- mindestens einen ersten Finger (120), der um eine in Bezug auf das Führungsprofil (G) feststehende erste Achse (D) drehbar ist, sich radial von der ersten Achse (D) erstreckt und einen Endabschnitt (121) aufweist, der dazu ausgelegt ist, die auf der Endstrecke (G2) verfahrenden Behälter (2) anzuschieben;
wobei das Verfahren die folgenden Schritte umfasst:
i) Bewegen der Behälter (2) auf das Führungsprofil (G) entlang der ausgerichteten Zufuhrrichtung (F);
wobei der Schritt i) Folgendes umfasst:
ii) Anschieben der auf der ersten Endstrecke (G2) verfahrenden Behälter (2) mittels des ersten Abschnitts (121);
wobei das Verfahren ferner die folgenden Schritte umfasst:
iii) vollständiges Lösen der Behälter (2) von dem Zufuhrsystem (8) an der Einlassstation (I); und
iv) Drehen des Endabschnitts (121) um die erste Achse (D) und entlang eines mit dem Führungsprofil (G) komplanaren imaginären Umfangs (113); wobei eine Linie (H) zu dem Umfang (113) an der Einlassstation (I) tangential ist;
wobei die ausgerichtete Zufuhrrichtung (F) mit der Linie (H) einen Winkel (α) bildet, der einen ebenen Abschnitt definiert, der die erste Achse (D) umfasst;
**dadurch gekennzeichnet, dass** der Winkel (α) größer als 90° ist und sich die Endstrecke (G2) gemäß der ausgerichteten Zufuhrrichtung (F) zunehmend einer Ebene (M) annähert, die die erste Achse (D) umfasst und orthogonal zu der Linie (H) ist.

11. Verfahren nach Anspruch 10, wobei der Schritt i) ferner Folgendes umfasst:
v) Bewegen der Behälter (2) auf eine weitere Strecke (G1) des Führungsprofils (G) mittels eines Aufnehmerrads (107), das einen Teil des Zufuhrsystems (8) ausmacht und um eine feststehende und zu der ersten Achse (D) parallele zweite Achse (C) drehbar ist; wobei gemäß der ausgerichteten Zufuhrrichtung (F) die weitere Strecke (G1) stromaufwärts der Endstrecke (G2) angeordnet ist;
wobei das Verfahren ferner den folgenden Schritt umfasst:
vi) Steuern der Drehungen des Aufnehmerrads (107) und des ersten Fingers (120) in einer koordinierten Weise, so dass die Behälter (2) kontinuierlich von dem Bewegen durch das Aufnehmerrad (107) zu dem Anschieben durch den Endabschnitt (121) übergehen.

12. Verfahren nach Anspruch 10 oder 11, ferner umfassend den folgenden Schritt:
vii) Bewegen der Fördervorrichtung (4) entlang eines Waschpfads (P), der die Einlassstation (I) umfasst;
wobei die Fördervorrichtung (4) eine Mehrzahl von Aufnahmen (17) umfasst, die entlang des Pfads (P) fluchten;
wobei das Verfahren ferner den folgenden Schritt umfasst:
viii) Einsetzen der Behälter (2) zumindest teilweise in die jeweiligen Aufnahmen (17) an der Einlassstation (I);
wobei die Aufnahmen (17) jeweilige offene Enden (18) aufweisen, die dazu eingerichtet sind, die Behälter (2) von dem Zufuhrsystem (8) aufzunehmen; wobei die Trajektorie der Grenzlinien der offenen Enden (18) eine imaginäre Kurve (J) definiert, die an der Einlassstation (I) tangential zu der Linie (H) ist.

13. Verfahren nach Anspruch 12, wobei der Schritt vii) den folgenden Schritt umfasst:
ix) Bewegen der Fördervorrichtung (4) in einer koordinierten Weise mit der Drehung des ersten Fingers (120), so dass der Endabschnitt (121) die Einlassstation (I) erreicht, wenn eine der Aufnahmen (17) die Einlassstation (I) erreicht.

## Revendications

1. Système d'alimentation (8) conçu pour alimenter un dispositif de transport (4) d'une unité de lavage (1) d'une pluralité de contenants vides (2) au niveau d'une station d'entrée (I) ; ledit système d'alimentation (8) comprenant :
au moins un profil de guidage (G) conçu pour guider lesdits contenants (2) suivant une direction d'alimentation orientée (F), qui est orientée en fonction de la direction d'avancée, en utilisation, desdits contenants (2) ; et
des moyens de déplacement (107, 108, 110, 111) pour déplacer lesdits contenants (2) sur ledit profil de guidage (G) dans ladite direction d'alimentation orientée (F) ;
ledit profil de guidage (G) comprenant un tendeur d'extrémité (G2) ayant une extrémité libre (W) disposée sur le côté de ladite station d'entrée (I) ;
lesdits contenants (2) étant complètement détachés, en utilisation, dudit système d'alimentation (8) au niveau de ladite station d'entrée (I) ;
lesdits moyens de déplacement (107, 108, 110, 111) comprenant, à leur tour, au moins un premier taquet (120), qui peut tourner autour d'un premier axe (D) fixe par rapport audit profil de guidage (G), s'étend radialement depuis ledit premier axe (D), et a une partie d'extrémité (121) conçue pour pousser, en utilisation, lesdits contenants (2) se déplaçant sur ledit tendeur d'extrémité (G2) ;
ladite partie d'extrémité (121) traçant, en utilisation, autour dudit premier axe (D), une circonférence imaginaire (113) coplanaire avec ledit profil de guidage (G) ; une ligne (H) étant tangente, en utilisation, à ladite circonférence (113) au niveau de ladite station d'entrée (I) ;
ladite direction d'alimentation orientée (F) formant avec ladite ligne (H) un angle (α) définissant une partie plane comprenant ledit premier axe (D) ;
**caractérisé en ce que** ledit angle (α) est supérieur à 90° et
dans lequel ledit tendeur d'extrémité (G2) s'approche progressivement, suivant ladite direction d'alimentation orientée (F), d'un plan (M) incluant ledit premier axe (D) et orthogonal à ladite ligne (H).

2. Système d'alimentation selon la revendication 1,
dans lequel ledit plan (M), en utilisation, est horizontal.

3. Système d'alimentation selon l'une quelconque des revendications précédentes, dans lequel ledit tendeur d'extrémité (G2) est rectiligne.

4. Système d'alimentation selon l'une quelconque des revendications précédentes, dans lequel ladite extrémité libre (W) se trouve sur ladite ligne (H) ou est disposée en amont de ladite ligne (H), suivant ladite direction d'alimentation orientée (F).

5. Système d'alimentation selon l'une quelconque des revendications précédentes, dans lequel lesdits moyens de déplacement (107, 108, 110, 111) comprennent au moins un second taquet (120) s'étendant radialement depuis ledit premier axe (D) et ayant un espacement angulaire fixe depuis ledit premier taquet (120) par rapport audit premier axe (D).

6. Système d'alimentation selon l'une quelconque des revendications précédentes, dans lequel lesdits moyens de déplacement (107, 108, 110, 111) comprennent en outre :
une roue de saisie (107) pouvant tourner autour d'un second axe (C) fixe et parallèle audit premier axe (D) et conçue pour déplacer, en utilisation, lesdits contenants (2) sur un autre tendeur (G1) dudit profil de guidage (G) ; ledit autre tendeur (G1) étant disposé en amont dudit tendeur d'extrémité (G2), suivant ladite direction d'alimentation orientée (F) ;
un premier et un second actionneur (110, 111) respectivement couplés à ladite roue de saisie (107) et audit premier taquet (120) pour entraîner indépendamment ladite roue de saisie (107) et ledit premier taquet (120) autour desdits premier et second axes respectifs (C, D) ; et
une unité de commande (125) couplée auxdits premier et second actionneurs (110, 111) ;
ladite unité de commande (125) étant programmée pour actionner lesdits premier et second actionneurs (110, 111) pour commander les rotations de ladite roue de saisie (107) et dudit premier taquet (120) de manière coordonnée, de sorte que lesdits contenants (2) passent en continu d'un déplacement par ladite roue de saisie (107) à une poussée par ladite partie d'extrémité (121).

7. Système d'alimentation selon la revendication 6, dans lequel ledit tendeur d'extrémité (G2) et ledit autre tendeur (G1) se chevauchent en partie et de préférence, définissent complètement ledit profil de guidage (G).

8. Unité de lavage (1) pour nettoyer une pluralité de contenants vides (2), l'unité de lavage comprenant :
un système d'alimentation (8) selon l'une quelconque des revendications précédentes ;
un dispositif de transport (4) pouvant se déplacer le long d'un trajet de lavage (P) et comprenant une pluralité de sièges (17) alignés le long dudit trajet (P) et respectivement remplis, en utilisation, par lesdits contenants (2) par ledit système d'alimentation (8) au niveau de ladite station d'entrée (I) ;
ledit trajet (P) comprenant ladite station d'entrée (I), au niveau de laquelle lesdits contenants (2) sont au moins en partie insérés à l'intérieur desdits sièges respectifs (17) ;
lesdits sièges (17) ayant des extrémités ouvertes respectives (18) conçues pour recevoir lesdits contenants (2) depuis ledit système d'alimentation (8) ; la trajectoire des limites desdites extrémités ouvertes (18) définissant, en utilisation, une courbe imaginaire (J) tangente à ladite ligne (H) au niveau de ladite station d'entrée (I).

9. Unité de lavage selon la revendication 8, dans laquelle lesdits sièges (17) ont des axes supplémentaires respectifs (Y), qui se trouvent sur un plan (M) au niveau de ladite station d'entrée (I) ; ledit plan (M) étant orthogonal à ladite ligne (H).

10. Procédé d'alimentation d'un dispositif de transport (4) d'une unité de lavage (1) d'une pluralité de contenants vides (2) au niveau d'une station d'entrée (I) au moyen d'un système d'alimentation (8) ; le système d'alimentation (8) comprenant :
au moins un profil de guidage (G), qui est conçu pour guider lesdits contenants (2) suivant une direction d'alimentation orientée (F) et comprend un tendeur d'extrémité (G2) ayant une extrémité libre (W) ; et
au moins un premier taquet (120), qui peut tourner autour d'un premier axe (D) fixe par rapport audit profil de guidage (G), s'étend radialement depuis ledit premier axe (D), et a une partie d'extrémité (121) conçue pour pousser lesdits contenants (2) en déplacement sur ledit tendeur d'extrémité (G2) ;
le procédé comprenant les étapes suivantes :
i) le déplacement desdits contenants (2) sur ledit profil de guidage (G) dans ladite direction d'alimentation orientée (F) ;
dans lequel l'étape i) comprend :
ii) la poussée desdits contenants (2) en déplacement sur ledit tendeur d'extrémité (G2) au moyen de ladite partie d'extrémité (121) ;
le procédé comprenant en outre les étapes suivantes :
iii) le détachement complet desdits contenants (2) dudit système d'alimentation (8) au niveau de ladite station d'entrée (I) ; et
iv) la rotation de ladite partie d'extrémité (121) autour dudit premier axe (D) et le long d'une circonférence imaginaire (113) coplanaire avec ledit profil de guidage (G) ; une ligne (H) étant tangente à ladite circonférence (113) au niveau de ladite station d'entrée (I) ;
ladite direction d'alimentation orientée (F) formant avec ladite ligne (H) un angle (α) définissant une partie plane comprenant ledit premier axe (D) ;
**caractérisé en ce que** ledit angle (α) est supérieur à 90° et ledit tendeur d'extrémité (G2) s'approche progressivement, suivant ladite direction d'alimentation orientée (F), d'un plan (M) incluant ledit premier axe (D) et orthogonal à ladite ligne (H).

11. Procédé selon la revendication 10, dans lequel l'étape i) comprend en outre :
v) le déplacement desdits contenants (2) sur un autre tendeur (G1) dudit profil de guidage (G) au moyen d'une roue de saisie (107) qui fait partie dudit système d'alimentation (8) et pouvant tourner autour d'un second axe (C) fixe et parallèle audit premier axe (D) ; ledit autre tendeur (G1) étant disposé en amont dudit tendeur d'extrémité (G2), suivant ladite direction d'alimentation orientée (F) ;
dans lequel le procédé comprend en outre l'étape suivante :
vi) la commande des rotations de ladite roue de saisie (107) et dudit premier taquet (120) de manière coordonnée de sorte que lesdits contenants (2) passent en continu d'un déplacement par ladite roue de saisie (107) à une poussée par ladite partie d'extrémité (121) .

12. Procédé selon la revendication 10 ou 11, comprenant en outre l'étape suivante :
vii) le déplacement dudit dispositif de transport (4) le long d'un trajet de lavage (P) comprenant ladite station d'entrée (I) ;
ledit dispositif de transport (4) comprenant une pluralité de sièges (17) alignés le long dudit trajet (P) ;
le procédé comprenant en outre l'étape suivante :
viii)l'insertion desdits contenants (2), au moins en partie, à l'intérieur desdits sièges respectifs (17) au niveau de ladite station d'entrée (I) ;
lesdits sièges (17) ayant des extrémités ouvertes respectives (18) conçues pour recevoir lesdits contenants (2) depuis ledit système d'alimentation (8) ; la trajectoire des limites desdites extrémités ouvertes (18) définissant une courbe imaginaire (J) tangente à ladite ligne (H) au niveau de ladite station d'entrée (I).

13. Procédé selon la revendication 12, dans lequel l'étape vii) comprend l'étape suivante :
ix) le déplacement dudit dispositif de transport (4) de manière coordonnée avec la rotation dudit premier taquet (120), de sorte que ladite partie d'extrémité (121) atteint ladite station d'entrée (I) lorsque l'un desdits sièges (17) atteint ladite station d'entrée (I).
